# EUROPEAN PATENT SPECIFICATION

(11) **EP 2 961 113 B1**
(45) Date of publication and mention of the grant of the patent: **24.05.2017**
(21) Application number: 14305985.5
(22) Date of filing: 24.06.2014
(51) Int. Cl.: H04L 12/707, H04L 12/24, H04L 12/437, H04L 12/703, H04L 12/723

(54) **CONTROL OF PROTECTION SWITCHING IN A COMMUNICATION NETWORK**
STEUERUNG DER SCHUTZSCHALTUNG IN EINEM KOMMUNIKATIONSNETZWERK
COMMANDE DE COMMUTATION DE PROTECTION DANS UN RÉSEAU DE COMMUNICATION

(43) Date of publication of application: 30.12.2015
(73) Proprietor: Alcatel Lucent, 92100 Boulogne-Billancourt (FR)
(72) Inventor: Addeo, Christian, 20059 Vimercate (IT); Bersani, Laura, 20059 Vimercate (IT); Rossi, Alessandra, 20059 Vimercate (IT); Liu, Dalin, 201206 Shanghai (CN)
(74) Representative: Wetzel, Emmanuelle

(56) References cited:
- VAN HELVOORT H ET AL: "MPLS-TP Ring Protection Switching (MRPS); draft-helvoort-mpls-tp-ring-protection-swi tching-06.txt", MPLS-TP RING PROTECTION SWITCHING (MRPS); DRAFT-HELVOORT-MPLS-TP-RING-PROTECTION-SWI TCHING-06.TXT, INTERNET ENGINEERING TASK FORCE, IETF; STANDARDWORKINGDRAFT, INTERNET SOCIETY (ISOC) 4, RUE DES FALAISES CH- 1205 GENEVA, SWITZERLAND, 18 April 2014 (2014-04-18), pages 1-41, XP015098740, [retrieved on 2014-04-18]
- JEONG-DONG RYOO ETRI REP OF KOREA: "Latest draft of G.8132 MPLS-TP shared protection ring;WD 03", ITU-T DRAFT ; STUDY PERIOD 2009-2012, INTERNATIONAL TELECOMMUNICATION UNION, GENEVA ; CH, vol. 9/9, 6 September 2012 (2012-09-06), pages 1-19, XP017576731, [retrieved on 2012-09-06]
- BUSI I ET AL: "Operations, Administration, and Maintenance Framework for MPLS-Based Transport Networks; rfc6371.txt", OPERATIONS, ADMINISTRATION, AND MAINTENANCE FRAMEWORK FOR MPLS-BASED TRANSPORT NETWORKS; RFC6371.TXT, INTERNET ENGINEERING TASK FORCE, IETF; STANDARD, INTERNET SOCIETY (ISOC) 4, RUE DES FALAISES CH- 1205 GENEVA, SWITZERLAND, 21 September 2011 (2011-09-21), pages 1-62, XP015081297, [retrieved on 2011-09-21]

## Description

### Technical field

The present invention relates to the field of communication networks. In particular, the present invention relates to a method for controlling protection switching in a communication network (in particular, but not exclusively, an MPLS or MPLS-TP network) having a ring topology.

### Background art

As known, in a packet-switched communication network each user traffic flow is divided into packets which are routed from a source node to a destination node along a path comprising one or more intermediate nodes connected by links.

In an MPLS (Multi-Protocol Label Switching) network, as defined by the IETF RFC 3031 (January 2001), the path followed by the packets carrying a given user traffic flow through the network is called Label Switched Path (briefly, LSP).

A particular version of MPLS, which is termed MPLS-TP (MPLS Transport Profile), is employed as a network layer technology for transport networks.

MPLS and MPLS-TP networks may have various topologies, including a ring topology. In particular, the ITU-T draft Recommendation "G.8132 draft MPLS-TP shared protection ring protection" (May 2009) and the IETF Internet-Draft "MPLS-TP Ring Protection Switching (MRPS)", draft-helvoort-mpls-tp-ring-protection-switching-06.txt, (April 18, 2014) defines an MPLS-TP Ring Protection Switching (in brief, MRPS) scheme allowing to protect user traffic flows transmitted over an MPLS-TP network comprising a number of nodes connected by links according to a ring topology. In particular, according to the MRPS scheme, the links form two counter-rotating ringlets, namely a clockwise ringlet and a counterclockwise ringlet, carrying traffic in opposite directions relative to each other. In particular, the bandwidth of each ringlet is divided into a working bandwidth dedicated to working LSPs, i.e. LSPs carrying user traffic flows, and a protection bandwidth dedicated to protection LSPs. The protection LSP(s) of one ringlet may be used to carry working LSP(s) of the other ringlet in case of failure.

In case of a link or node failure, user traffic transmitted by the affected working LSP(s) may be switched to any of the protection LSPs, e.g. according to a wrapping technique.

According to the wrapping technique, in an exemplary case of a unidirectional failure affecting a link of the clockwise ringlet, the node that detects the failure (i.e. the node downstream the failed link) informs the node at the opposite side of the failure (i.e. the node upstream the failed link) and both perform protection switching, i.e. they both switch the MPLS packets of the working LSP(s) transmitted over the failed link to the protection LSP(s) in the opposite direction. According to the example above, the nodes adjacent to the failed link switch the packets to the counterclockwise ringlet. Therefore, from the node upstream the failed link the packets travel along the counterclockwise ringlet until they reach the node downstream the failed link. Then, this node switches the packets back to the clockwise ringlet. User traffic whose working direction is clockwise is protected in the counterclockwise direction and vice versa.

The nodes of the network typically implement a control protocol for controlling and coordinating the protection switching actions. An example of control protocol is the Automatic Protection Switching (APS) protocol. According to the ITU-T draft Recommendation "G.8132 draft MPLS-TP shared protection ring protection" and the IETF Internet-Draft "MPLS-TP Ring Protection Switching (MRPS)", draft-helvoort-mpls-tp-ring-protection-switching-06.txt, (April 18, 2014), cited above, in a MPLS-TP ring network, the wrapping technique implies that the node detecting a failure sends out, in both directions, an APS request packet or packet to the node at the opposite side and adjacent to the failure, so that both nodes may switch the user traffic from working LSP(s) to a protection LSP. If the failure is unidirectional, the APS request packets reach the node at the opposite side and adjacent to the failure from both directions. If the failure is bidirectional, the APS request packets reach that node from one direction only.

Generally, APS request packets transfer within the network a set of commands, which may be automatically initiated by the nodes in case of failure conditions or they may be externally initiated.

An APS request packets comprises a payload in turn comprising four fields used to carry APS-specific information:
- a destination node identifier identifying the node to which the APS request is destined;
- a source node identifier identifying the node generating the APS request;
- an APS request code comprising a four bits code identifying the request type (or command); and
- a reserved field of one byte.
The APS request code (also referred to, in the following, as simply "code" or "indication") may be one of the following: Lockout of Protection (LP), Forced Switch (FS), Signal Fail (SF), Manual Switch (MS), Wait-To-Restore (WTR), Exerciser (EXER), Reverse Request (RR), No Request (NR). The codes are listed from the highest to the lowest priority, i.e. the Lockout of Protection code corresponds to a request having the highest priority. The APS request codes are used to transfer respective commands and detected defect indications within the network.

In particular, the Lockout of Protection code corresponds to a command which prevents any protection activity and prevents using protection switches anywhere in the ring. In particular, a respective command may be applied at a node of the ring by a network operator and the node sends APS request packets, on both the short path and the long path of the ring, carrying the Lockout of Protection code. When the nodes of the ring receive this packet, all existing switches in the ring must be dropped.

The Signal Fail code corresponds to a detected defect indication which is issued when a node detects a signal failure condition.

In the absence of failures, each node of the network typically periodically (e.g. every 5 seconds) dispatches APS request packets to the adjacent nodes containing a No Request code.

In the following description, the term "signaling" associated with one of the APS codes above will indicate one or more APS request packets carrying that code. For instance, the expression "Lockout of Protection (or any other APS request code) signaling" will indicate one or more APS request packets carrying the Lockout of Protection code (or any other APS request code). Moreover, the expression "send/receive a Lockout of Protection (or any other APS request code) signaling" will indicate the transmission/reception of one or more APS request packets carrying the Lockout of Protection code (or any other APS request code) according to the APS control protocol. Analogously, the expression "to signal a Lockout of Protection command (or any other command)" will indicate the transmission of one or more APS request packets carrying the Lockout of Protection code (or any other APS request code) according to the APS control protocol.

Moreover, the APS standard provides for different states of the nodes of the ring. In particular, a node is in a idle state when it has no APS request and is sourcing and receiving messages comprising the No Request code to/from both directions. A node is in a pass-through state when its highest priority APS request is a request not destined to or sourced by it. The pass-through is bidirectional. A node not in the idle or pass-through states is in the switching state. Moreover, the switching state is usually associated with a command or a detected defect indication: for instance, a node may be in a Lockout of protection switching state (LP-SW) when a local Lockout of protection command is applied at the node, or it may be in a Signal Fail switching state (SF-SW) when it detects a failure condition.

### Summary of the invention

The inventors noticed that in a ring network implementing the MRPS scheme and the APS protocol mentioned above, the following situation may occur.
1) A Lockout of Protection command is applied to a node of the ring in idle condition on an interface towards an adjacent remote node. As a consequence, the node addressed by the command (also referred to as "tail end") sends APS request packets carrying the Lockout of Protection code towards the remote node (also referred to as "head end") on both the short path (i.e. the path connecting directly the head end and the tail end along a ringlet) and the long path (i.e. the path along which the head end and tail end are connected through intermediate nodes, along the opposite ringlet) of the ring; the remote node, upon receiving the Lockout of Protection signaling, issues a same APS request packet and sends it over the long path, and issues an APS request packet containing a Reverse Request code and sends it over the short path.
2) A bidirectional failure condition occurs in the same span of the network interested by the Lockout of Protection command (i.e. the span connecting directly the head end and the tail end) and the failure is detected bidirectionally by both the adjacent end nodes of that span. Due to the higher priority, the Lockout of Protection command is still kept and signaled. But, as a consequence of the bidirectional failure condition, the Reverse Request signaling previously received by the node where the Lockout of Protection command is applied is not received anymore along the short path; however, a Lockout of Protection signaling is still received along the long path. In the following description and in the claims, the term "span" will indicate any section of the ring comprising two adjacent nodes and the links therebetween.
3) A Clear command is applied at the node where the Lockout of Protection command was previously applied. Provided that the node is still receiving a Lockout of Protection signaling over the long path (indeed, this Lockout of Protection signaling is transmitted by the head end as an acknowledgement of the command previously present), the node is not allowed to drop the Lockout of Protection condition which is still kept and, as a consequence, it enters a so-called deadlock condition.
4) The failure is not protected and the traffic is lost.

Each of the two end nodes of the failed span receives an APS request packet carrying a Lockout of Protection code, i.e. each of the two end nodes is signaled as if a Lockout of Protection command was applied on the other node. This command is referred to as Lockout of Protection-Far End. In other words, the situation in which one Lockout of Protection command is applied to an end node and the situation in which two Lockout of Protection commands are applied at the two end nodes are indistinguishable.

Consequently, the two end nodes of the failed span result in a switching state, indicated as "Lockout of Protection-Far End switching state" or "LP-FE-SW state", that cannot change either automatically or by intervention of an operator until the failure affecting the span is recovered. In this case, indeed, the APS signaling over the span carries a Reverse Request code allowing both nodes to evolve to idle state.

The deadlock condition may be overcome by removing and reconfiguring the MRPS protection from the node where the Lockout of Protection command is applied or, in alternative, by removing the failure condition, which would allow the node to evolve to idle state.

However, these procedures have some drawbacks. On the one hand, they are disadvantageous in terms of operational costs and recovery times. Indeed, the procedure is not automatic as it requires an operator to be alerted for activating the proper actions. On the other hand, they are disadvantageous in terms of performance. Indeed, when the deadlock condition occurs and for the time it affects the ring, the ring experiences a loss of the recovery capability provided by the MRPS scheme, as the traffic traveling along the failed span is not protected and it is lost.

In view of the above, the Applicant has faced the problem of providing a method for controlling protection switching in a communication network (in particular, but not exclusively, an MPLS or MPLS-TP network) having a ring topology, which overcomes the aforesaid drawbacks. In particular, the Applicant has faced the problem of providing a method for controlling protection switching in a ring communication network which allows avoiding a deadlock condition in a manner which is automatic and compatible with the protection switching scheme, while keeping the ring under the full recovery capability provided by the protection switching scheme.

In the following description and in the claims,
- the expression "lockout of protection command" will indicate a command inhibiting any protection switching operation in the whole communication network, such as the Lockout of Protection command described above with reference to the APS control protocol;
- the expression "request packet" will indicate a packet carrying a command and/or a detected defect indication within the communication network according to the control protocol used for controlling the protection switching, such as the APS request packet described above;
- the expression "signal fail indication" will indicate an information carried within a request packet indicative of a failure condition in the communication network, such as the Signal Fail code described above;
- the expression "lockout of protection indication" will indicate an information carried within a request packet indicative of a lockout of protection command applied at a node, such as the Lockout of Protection code described above;
- the expression "signal fail switching state" will indicate a state of a protection switching instance in a node according to which the node detects a failure condition, sends a corresponding signaling within the network and implements the protection switching for circumventing the failure. The wording "protection switching instance" (in particular, MRPS instance) indicates the set of network resources at the nodes of the communication network which may be used for an application/implementation of a protection switching scheme (in particular, MRPS) as described above. At one node, a protection switching instance comprises the attributes and parameters that apply to support the instance itself.
- The expression "lockout of protection switching state" will indicate a state of a protection switching instance in a node where a lockout of protection command is applied, the node being prevented from implementing the protection switching; and
- the expression "lockout of protection - far end switching state" will indicate a state of a protection switching instance in a node according to which the node is receiving a signaling carrying a lockout of protection indication that a lockout of protection command has been applied at another node, and is prevented from implementing the protection switching.

According to a first aspect, the present invention provides a method for controlling protection switching in a communication network having a ring topology, the communication network being configured to implement an MLPS-TP ring protection switching scheme and an automatic protection switching control protocol, wherein
a lockout of protection command is applied at a node of the network;
a bidirectional failure occurs on a span connecting said node to an adjacent node of the network; and
a further command is applied at the node, the further command
removing the lockout of protection command,
the method comprising, at any one of the node and the adjacent node, detecting the failure, the method being characterized in that it comprises, if there is not a further lockout of protection command locally applied at any one of the node and the adjacent node, sending a request packet carrying a signal fail indication towards the other one of the node and the adjacent node.

According to a first embodiment, the method comprises:
a) at the adjacent node, detecting the failure and, if there is not the further lockout of protection command locally applied at the adjacent node, sending the request packet carrying the signal fail indication towards the node; and
b) at the node, detecting the failure, receiving the request packet and, if there is not an even further lockout of protection command locally applied at the node, implementing the protection switching to a user traffic flow affected by the failure.
Preferably, the method further comprises, at step b), entering a signal fail switching state and sending a further request packet carrying the signal fail indication towards the adjacent node.

Preferably, the method further comprises:
c) at the adjacent node (A), receiving the further request packet, entering a signal fail switching state and implementing the protection switching to the user traffic flow affected by the failure.
According to a second embodiment, the method comprises comprises:
a') at the node, detecting the failure and, if there is not the further lockout of protection command locally applied at the node, sending the request packet carrying the signal fail indication, and implementing the protection switching to a user traffic flow affected by the failure; and
b') at the adjacent node, detecting the failure, receiving the request packet and, if there is not an even further lockout of protection command locally applied at the adjacent node, implementing the protection switching to the user traffic flow.

Preferably, the method further comprises, at step a'), entering a signal fail switching state.

Preferably, the method further comprises, at step b'), entering a signal fail switching state and sending a further request packet carrying the signal fail indication towards the node.

Profitably, the method further comprises, at the step a'), launching a timer.

Preferably, the timer has a pre-determined duration and the duration is pre-determined on the basis of a round-trip time of a request packet over a long path between the node and the adjacent node.

Preferably, the method further comprises :
c') at the node, receiving the further request packet and, if the timer is not yet expired, stopping the timer.

Preferably, the method further comprises, at the node, upon expiration of the timer, receiving an even further request packet carrying a lockout of protection indication from the adjacent node, entering a lockout of protection - far end switching state and stopping implementing the protection switching to the user traffic flow.

According to a second aspect, the present invention provides node for a communication network having a ring topology and implementing a protection switching scheme, the protection switching scheme being an MLPS-TP ring protection switching scheme, the node being configured to implement an automatic protection switching control protocol and to, when
a lockout of protection command is applied at a further node of the communication network adjacent to the node;
a bidirectional failure occurs on a span connecting the node to the adjacent node; and
a further command is applied at the adjacent node, the further command removing the lockout of protection command,
detect the failure, the node being characterized in that it is further configured to, if there is not a further lockout of protection command locally applied at the node, send a request packet carrying a signal fail indication towards the adjacent node.

According to a third aspect, the present invention provides a node for a communication network having a ring topology and implementing a protection switching scheme, the protection switching scheme being an MLPS-TP ring protection switching scheme, the node being configured to implement an automatic protection switching control protocol and to, when
a lockout of protection command is applied at the node;
a bidirectional failure occurs on a span connecting the node to a further node of the communication network adjacent to the node; and
a further command is applied at the node, the further command removing the lockout of protection command,
detect the failure, the node being characterized in that it is further configured to, if there is not a further lockout of protection command locally applied at the node, send a request packet carrying a signal fail indication towards the adjacent node.

According to a fourth aspect, the present invention provides a communication network having a ring topology comprising a node as set forth above.

Preferably, the communication network is an MPLS or MPLS-TP communication network.

### Brief description of the drawings

The present invention will become clearer by reading the following detailed description, given by way of example and not of limitation, to be read by referring to the accompanying drawings, wherein:
- Figure 1 schematically shows a communication network having a ring topology and a working path passing over a span of the network;
- Figure 2 schematically shows the network of Figure 1 when a lockout of protection command is applied at a node;
- Figure 3 schematically shows the network of Figure 2 when a failure occurs on the span of the network over which the working path is passing;
- Figure 4 schematically shows the network of Figure 3 when the lockout of protection command is removed, according to a first embodiment of the present invention;
- Figure 5 schematically shows the network of Figure 4 and a protection path for the working path of Figure 1;
- Figure 6 is a flow chart illustrating the state diagrams of the end nodes of the span affected by the failure according to the first embodiment of the present invention;
- Figure 7 schematically shows the network of Figure 3 when the lockout of protection command is removed, according to a second embodiment of the present invention; and
- Figure 8 is a flow chart illustrating the state diagrams of the end nodes of the span affected by the failure according to the second embodiment of the present invention.

### Detailed description of preferred embodiments of the invention

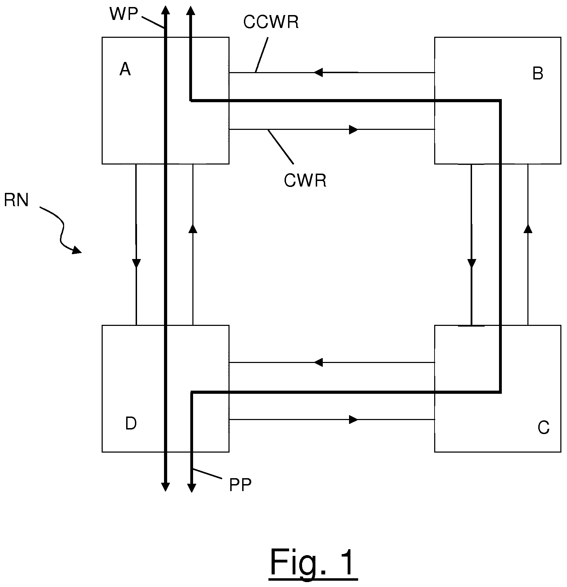

Figure 1 schematically shows a communication network RN having a ring topology.

The communication network RN preferably comprises a number of nodes connected to form a ring. Exemplarily, the communication network RN of Figure 1 comprises four nodes, A, B, C, D.

Preferably, the nodes A, B, C, D are connected through unidirectional physical links both in a clockwise direction and in a counter-clockwise direction. The unidirectional physical links connecting the nodes A, B, C, D in the clockwise direction preferably form a clockwise ringlet CWR, while the unidirectional physical links connecting the nodes A, B, C, D in the counter-clockwise direction preferably form a counter-clockwise ringlet CCWR.

The communication network RN is preferably a packet-switched network. More preferably, the communication network CN is an MPLS network or an MPLS-TP network.

Preferably, the nodes of the network RN are configured to implement a protection switching scheme (in particular, the MPLS-TP Ring Protection Switching, or MRPS, scheme) and the wrapping technique described above. Moreover, each node of the communication network RN is preferably configured to implement a control protocol for controlling and coordinating protection switching actions with the other nodes of the network. Preferably, the control protocol is the APS (Automatic Protection Switching) protocol described above.

For sake of simplicity, in the following description, reference will be made in particular to the MPLS-TP Ring Protection Switching scheme and the APS protocol, and the language will adhere to the language used in the current standard specifications mentioned above. However, the present invention is not intended to be limited to the protection switching scheme and the control protocol as described therein, as it may be applied also when other protection switching schemes and control protocols, with corresponding provisions, are implemented.

It is assumed that a working path WP carrying a user traffic flow comprises span A-D of the network RN. Moreover, it is assumed that the working path WP, in case of failure affecting span A-D, is normally protected by wrapping the traffic flow along a protection path PP comprising spans A-B, B-C and C-D.

It is also assumed that the following two conditions are contemporarily present within the network RN:
1) a Lockout of Protection command is applied at node D, in particular on the span A-D connecting node D to node A; and
2) a bidirectional failure affects span A-D.
The two conditions above can occur in any order.

Moreover, it is finally assumed that a Clear command is applied to node D to remove the Lockout of Protection command.

In this situation, both node D and node A are in a Lockout of Protection-Far End switching state, while nodes B and C as in pass-through state.

The skilled person may easily appreciate that this situation would lead to a deadlock condition as described in the preceding section, which would cause a loss of packets comprised in the user traffic flow.

However, according to a first embodiment of the present invention when node A:
- detects a failure on span A-D;
- receives a Lockout of Protection signaling over the long path (i.e. the path comprising spans D-C, C-B and B-A) from node D; and
- has no locally applied Lockout of Protection commands,
it preferably remains in the Lockout of Protection-Far End switching state but it sends a Signal Fail signaling over the long path, as an exception to the provisions of MRPS scheme and APS control protocol, as described in the "G.8132 draft MPLS-TP shared protection ring protection" (May 2009) and the IETF Internet-Draft "MPLS-TP Ring Protection Switching (MRPS)", draft-helvoort-mpls-tp-ring-protection-switching-06.txt, (April 18, 2014).

Then, when node D:
- detects the failure on span A-D;
- receives over the long path a Signal Fail signaling from node A; and
- has no locally applied Lockout of Protection commands,
it preferably moves from the Lockout of Protection-Far End switching state to the Signal Fail switching state, sends a Signal Fail signaling over the long path and applies the protection switching scheme by wrapping the user traffic flow from the failed working path to the protection path.

Then, also node A preferably moves from the Lockout of Protection-Far End switching state to the Signal Fail switching state, sends a Signal Fail signaling over the long path and applies the protection switching scheme by wrapping the user traffic flow from the failed working path to the protection path.

According to a second embodiment of the present invention, when node A:
- detects a failure on span A-D;
- receives a Lockout of Protection signaling over the long path from node D; and
- has no locally applied Lockout of Protection commands,
it preferably remains in the Lockout of Protection-Far End switching state and it sends a Lockout of Protection signaling over the long path.

Then, when node D:
- detects the failure on span A-D;
- receives over the long path a Lockout of Protection signaling from node A; and
- has no locally applied Lockout of Protection commands,
it preferably moves from the Lockout of Protection-Far End switching state to a Signal Fail switching state, as an exception to the provisions of MRPS scheme and APS control protocol, as described in the "G.8132 draft MPLS-TP shared protection ring protection" (May 2009) and the IETF Internet-Draft "MPLS-TP Ring Protection Switching (MRPS)", draft-helvoort-mpls-tp-ring-protection-switching-06.txt, (April 18, 2014). Then, node D sends a Signal Fail signaling over the long path and applies the protection switching scheme by wrapping the user traffic flow from the failed working path to the protection path. At the same time, node D preferably launches a timer with a predetermined duration.

Then, when node A receives the Signal Fail signaling over the long path from node D (and if there is not a locally applied Lockout of Protection command), it moves from the Lockout of Protection-Far End switching state to the Signal Fail switching state, sends a Signal Fail signaling over the long path to node D and applies the protection switching scheme by wrapping the user traffic flow from the failed working path to the protection path.

During the timer's running time, node D preferably remains in the Signal Fail switching state and continues sending the Signal Fail signaling. In other words, during the timer's running time, node D "ignores" the request packets that it is receiving over the long path.

If, before expiration of the timer or upon expiration of the timer, node D receives a Signal Fail signaling over the long path from node A (because node A, upon reception of a Signal Fail signaling over the long path from node D, has entered the Signal Fail switching state), it preferably remains in the Signal Fail switching state, stops timer and continues sending the Signal Fail signaling. In this case, both node D and node A are implementing the protection switching scheme and they are wrapping the user traffic flow from the failed working path WP to the protection path PP.

If, upon expiration of the timer, node D receives a Lockout of Protection signaling over the long path from node A (because, for instance, a local Lockout of Protection command has been applied at node A on span A-D), it preferably moves from the Signal Fail switching state into the Lockout of Protection-Far End switching state and starts sending the Lockout of Protection signaling over the long path. In this case, node D stops wrapping the user traffic flow from the working path WP to the protection path PP.

According to both the embodiments above, the method of the present invention provides for controlling protection switching within the network RN by overriding the provisions of the standard specifications for the MRPS protection switching scheme and the APS control protocol. Indeed, according to the present invention, in a situation of possible deadlock as described above, one node at an end of the span affected by the failure, namely either node A (first embodiment) or node D (second embodiment), sends a Signal Fail signaling to the node at the opposite end of the span, irrespective of the provisions of the standard specifications. According to the first embodiment, node A sends such signaling even if it is in a Lockout of Protection-Far End switching state. According to the second embodiment, node D enters the Signal Fail switching state and sends a corresponding signaling even if it is receiving a Lockout of Protection signaling over the long path.

In this way, according to both the first embodiment of the present invention and the second embodiment of the present invention, the deadlock condition is advantageously avoided. Hence, a user traffic flow, which is protected according to the implemented protection switching scheme and passes (in normal conditions) through the failed span, may be advantageously correctly recovered.

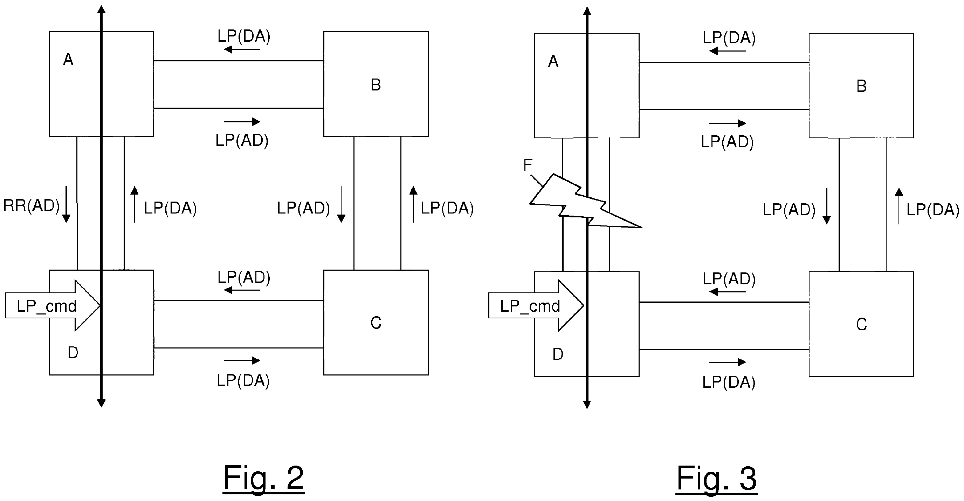

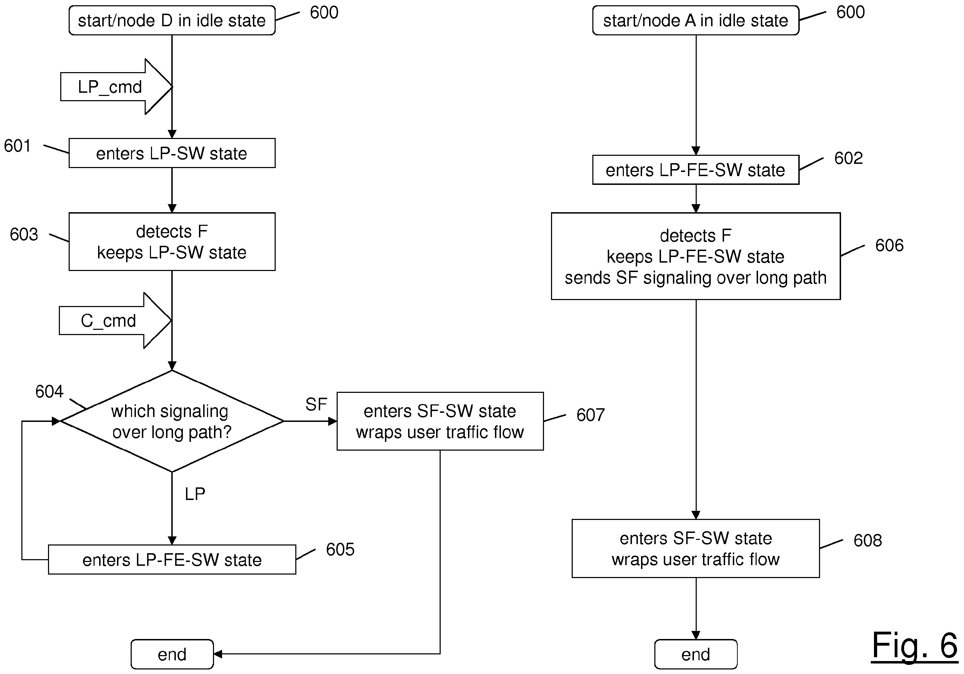

Figures 2, 3, 4, 5 and 6 illustrate in greater detail the first embodiment of the present invention. In particular, Figure 6 is a flow chart representing the state diagram of nodes A and D.

Nodes A, B, C, D are initially in idle state (step 600 of Figure 6) and they issue and send request packets carrying a No Request code (not shown in the Figures).

Further, it is assumed that a Lockout of Protection command is applied at node D (see Figure 2). In Figure 2 and in Figure 6, application of the Lockout of Protection command is represented by means of an arrow labeled with the reference "LP_cmd". In particular, the Lockout of Protection command LP_cmd is preferably applied at node D with reference to the span connecting node D to node A of network RN.

In this case, as illustrated in Figure 6, step 601, node D enters a Lockout of Protection switching state (LP-SW state).

As already described above, when the Lockout of Protection command LP_cmd is applied at node D and node D enters the Lockout of Protection switching state, it issues one or more request packets according to the control protocol mentioned above. In particular, the request packets issued by node D preferably comprises a Lockout of Protection code.

Then, node D preferably send the request packets to node A over the short path (i.e. span A-D) and send similar request packets to node A over the long path. In Figure 2, these request packets are indicated with the same reference LP(DA).

Node A, upon receiving the request packet LP(DA) from node D preferably enters a Lockout of Protection-Far End switching state (LP-FE-SW state), as illustrated in Figure 6, step 602. Then, preferably, node A:
- issues one or more first request packets, carrying the Lockout of Protection code. Then, node A sends the first request packets subsequently over the long path towards node D. The first request packet issued by node A is indicated in Figure 2 with reference LP(AD); and
- issues one or more second request packets, carrying the Reverse Request code, and send them subsequently over the short path (i.e. send them towards node D). The second request packet issued at node A is indicated in Figure 2 with reference RR(AD). Node B and node C enter a pass-through state.

At this point, it is assumed that a bidirectional failure F affects span A-D (see Figure 3).

The two conditions described above, namely applying the Lockout of Protection command LP_cmd and the occurrence of failure F, may occur in any order, namely firstly the Lockout of Protection command LP_cmd is applied at node D and then the bidirectional failure occurs on span A-D or viceversa. Figures 2-5 illustrate the situation according to which the Lockout of Protection command LP_cmd is applied first and then the bidirectional failure F occurs.

When the failure F occurs, the failure is detected bidirectionally by both node D and node A (steps 603 and 606 of Figure 6).

In particular, at step 603, node D preferably:
- detects the bidirectional failure F;
- receives over the long path the first request packet LP(AD) carrying the Lockout of Protection code from node A; and
- remains in the Lockout of Protection switching state.

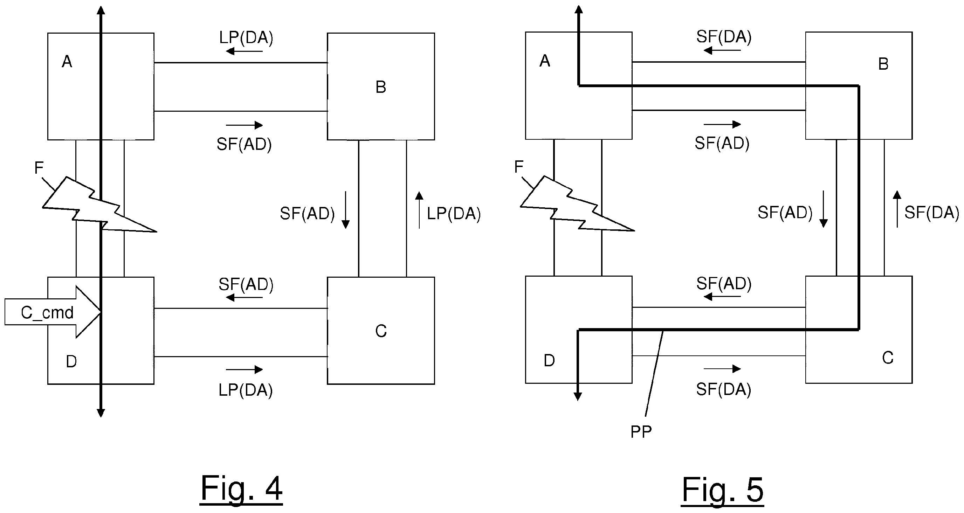

At this point, as illustrated in Figure 4 and Figure 6, a further command C_cmd may be applied to node D in order to remove the Lockout of Protection command LP_cmd. As mentioned above, this further command is preferably a Clear command.

In the meanwhile, node D is receiving from node A over the long path a first request packet LP(AD) carrying the Lockout of Protection code. When node D detects that it is receiving over the long path a first request packet LP(AD) carrying the Lockout of Protection code (step 604), it moves from the Lockout of Protection switching state to a Lockout of Protection-Far End switching state (step 605 of Figure 6) and keeps sending over the long path request packets carrying the Lockout of Protection code, indicated in Figure 4 with reference LP(DA).

At step 606, node A preferably:
- detects the bidirectional failure F; and
- receives from node D the request packet LP(DA) comprising the

Lockout of Protection code over the long path.
If no Lockout of Protection command is locally applied at node A on span A-D, node A remains in the Lockout of Protection-Far End switching state but issues and sends over the long path one or more request packets containing a Signal Fail code. This request packet is indicated in Figure 4 by reference SF(AD).

When node D detects that over the long path it is receiving a request packet SF(AD) carrying the Signal Fail code from node A (step 604 of Figure 6), it preferably moves from the Lockout of Protection-Far End switching state to a Signal Fail switching state (step 607). Moreover, at step 607, node D issues and sends over the long path request packets containing the Signal Fail code, as illustrated in Figure 5. This request packet is indicated in Figure 5 by reference SF(DA). Finally, at step 607, node D preferably implements the protection switching scheme and wraps the user traffic flow from the failed working path WP to the protection path PP.

At this point, also node A preferably moves from the Lockout of Protection-Far End switching state to a Signal Fail switching state, implements the protection switching scheme and wraps the user traffic flow from the failed working path WP to the protection path PP (step 608).

It is to be noticed that if a Lockout of Protection command is applied at node A on span A-D, at any time, node A preferably enters a Lockout of Protection switching state, and issues and sends over the long path request packets carrying a Lockout of Protection code. Any wrapping operation possibly initiated by node A for circumventing failure F is stopped. In this case node D enters a Lockout of Protection-Far End switching state and sends a Lockout of Protection signaling over the long path. When the failure is detected, node D starts sending a Signal Fail signaling as per the protocol exception described above.

As already mentioned above, according to this first embodiment of the present invention, the deadlock condition is advantageously avoided. Indeed, the node which is receiving a Lockout of Protection signaling over the long path and detects a failure over the span on which the user traffic flow should pass (node A in the situation above, by way of example), sends a Signal Fail signaling over the long path. This is an exception to the provisions of the MRPS scheme and the APS control protocol. In this way, the node at the opposite side of the failed span, upon removal of the Lockout of Protection command, may send a Signal Fail signaling as well, so that the two nodes may implement the protection switching scheme for recovering the user traffic flow.

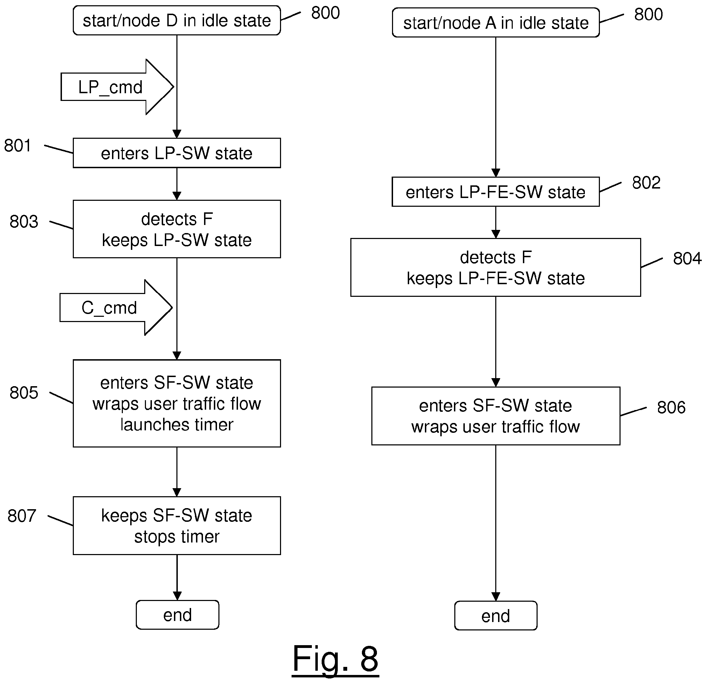

In the following, the method according to this second embodiment of the present invention will be described in greater detail with reference to Figures 2, 3, 7, 5 and 8. In particular, Figure 8 is a flow chart illustrating the state diagrams of nodes D and A.

As already described above with reference to the first embodiment of the present invention, nodes A, B, C, D are initially in idle state (step 800 of Figure 8) and they issue and send request packets carrying a No Request code (not shown in the Figures).

Further, it is assumed that a Lockout of Protection command LP_cmd is applied at node D (see Figure 2). In this case, as illustrated in Figure 8, step 801, node D enters a Lockout of Protection switching state (LP-SW state) and it preferably issues one or more request packets carrying a Lockout of Protection request code. These request packets, indicated with reference LP(DA) in Figure 2, are sent to node A over both the short path and the long path,

Node A, upon receiving the request packet LP(DA) from node D preferably enters a Lockout of Protection-Far End switching state (LP-FE-SW state), as illustrated in Figure 8, step 802. Then, preferably, node A:
- issues one or more first request packets LP(AD) carrying the Lockout of Protection code and sends them over the long path towards node D; and
- issues one or more second request packets RR(AD) carrying the Reverse Request code and send them over the short path send them towards node D.
Node B and node C enter a pass-through state.

At this point, it is assumed that a bidirectional failure F affects span A-D (see Figure 3).

Again, the two conditions described above, namely the application of command LP_cmd and the occurrence of failure F, may occur in any order, namely firstly the command LP_cmd is applied at node D and then the bidirectional failure occurs on span A-D or viceversa.

When the failure F occurs, the failure is detected bidirectionally by both node D and node A (steps 803 and 804 of Figure 8).

In particular, at step 803, node D preferably:
- detects the bidirectional failure F;
- receives over the long path the first request packets LP(AD) carrying the Lockout of Protection code from node A; and
- remains in the Lockout of Protection switching state.

Node A preferably:
- detects the bidirectional failure F;
- receives over the long path the request packet LP(DA) carrying the Lockout of Protection code from node D; and
- remains in the Lockout of Protection-Far End switching state.

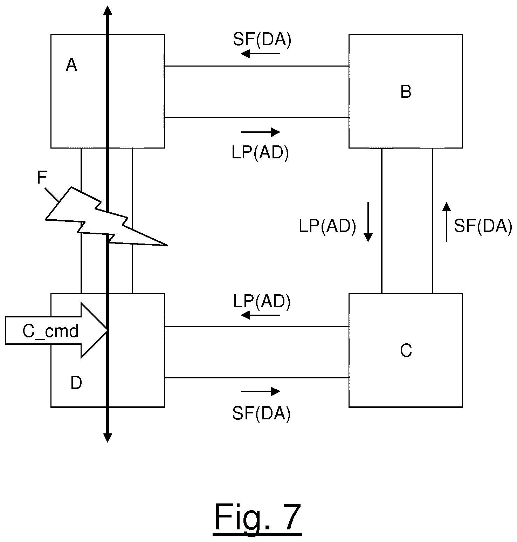

At this point, as illustrated in Figure 7 and Figure 8, a further command C_cmd may be applied to node D in order to remove the command LP_cmd. Preferably, this further command is a Clear command.

When the further command C_cmd is applied at node D, node D preferably enters the Signal Fail switching state irrespective of the fact that it is still receiving over the long path from node A request packets carrying the Lockout of Protection code. Then, node D preferably starts issuing and sending request packets carrying the Signal Fail code over the long path (indicated in Figure 7 by reference SF(DA)) and starts implementing the protection switching scheme by wrapping the user traffic flow from the failed working path WP to the protection path PP. In the meanwhile, preferably, node D launches a timer.

As already mentioned above, the timer has preferably a pre-determined duration. The pre-determined duration is preferably set by a network operator and depends on the number of nodes in the network RN. It also preferably depends on an average time T, which is determined as the average time in which a request packet is issued at a node and transmitted from that node to an adjacent node. Preferably, the duration of the timer is equal to (N-1)×2×T, where N is the number of nodes in the network RN. In other words, the predetermined timer duration is preferably equal to a round-trip time of a request packet over the long path. If, for instance, T=3.3 ms and N=128, the predetermined timer duration is equal to 838.2 ms.

For the period during which the timer is running, node D preferably remains in the Signal Fail switching state, issues and sends request packets comprising the Signal Fail code and wraps the user traffic flow. In the meanwhile, at step 806, node A preferably:
- detects the bidirectional failure F; and
- receives from node D the request packet SF(DA) comprising the Signal Fail code over the long path.
If no Lockout of Protection command is locally applied at node A, node A moves from the Lockout of Protection-Far End switching state to the Signal Fail switching state and start issuing and sending over the long path one or more request packets containing the Signal Fail. This request packet is indicated in Figure 5 by reference SF(AD). Moreover, node A starts performing protection switching actions and wrapping the user traffic flow.

When the timer expires or before the timer expires, node D preferably detects that it is receiving over the long path request packets SF(AD) carrying the Signal Fail code. Therefore, node D preferably remains in the Signal Fail switching state, stops the timer and continues sending request packets carrying the Signal Fail code. Moreover, node D continues implementing the protection switching scheme and wrapping the user traffic flow from the failed working path WP to the protection path PP.

It is to be noticed that if a Lockout of Protection command is locally applied at node A on span A-D, at any time, node A preferably enters a Lockout of Protection switching state, and issues and sends over the long path request packets carrying a Lockout of Protection code. In this case, if, upon expiration of the timer, node D receives request packets carrying the Lockout of Protection code over the long path from node A, node D preferably moves from the Signal Fail switching state to a Lockout of Protection-Far End switching state, issues request packets carrying the Lockout of Protection code and sends the Lockout of Protection signaling over the long path.

Also according to this second embodiment of the present invention, the deadlock condition is advantageously avoided. Indeed, when the Lockout of Protection command is removed at node D, and node D is detecting the failure on span A-D while receiving over the long path a Lockout of Protection signaling from node A, it moves from the Lockout of Protection-Far End switching state to a Signal Fail switching state, instead of moving into the Lockout of Protection-Far End switching state, as provided by the standard MRPS protection switching scheme and the APS control protocol. This advantageously allows starting implementing the protection switching scheme at node D overriding the Lockout of Protection signaling that node D is receiving over the long path from node A.

Therefore, according to the second embodiment of the present invention, in a situation in which a Lockout of Protection is applied and then removed at a node which is detecting a failure, the node enters a Signal Fail switching state that allows the node to start implementing the protection switching scheme for recovering the user traffic flow affected by the failure. This feature also allows reducing the recovery time in the presence of a unidirectional failure in combination with a Lockout of Protection command, as it will be described herein after.

Firstly, the "standard" behaviour of the nodes of network RN in presence of a unidirectional failure in combination with a Lockout of Protection command will be described as provided by the MRPS protection switching scheme and the APS control protocol.

Initially, the nodes A, B, C, D are all in the idle state and the working path WP is carrying a user traffic flow over span A-D of the network RN. Then, at node D, a Lockout of Protection command is applied on span A-D, as already described above with reference to Figure 2. Node D enters a Lockout of Protection switching state, issues request packets carrying the Lockout of Protection code and sends them over the short path and the long path towards node A. Upon reception of a request packet carrying the Lockout of Protection code, node A enters a Lockout of Protection-Far End switching state. Then, also node A issues request packets carrying the Lockout of Protection code and sends them over the long path towards node D. Nodes B and C enter the pass-through state.

Then, a unidirectional failure occurs on span A-D (e.g. in the direction from node A to node D). In this case, node D and node A remain in the respective current state.

When a further command is applied at node D removing the Lockout of Protection command (i.e. the Clear command already described above), node D, which is receiving request packets carrying the Lockout of Protection code over the long path and is detecting a failure over span A-D, enters the Lockout of Protection-Far End switching state. Node D issues and sends a Lockout of protection signaling over the long path and a Reverse Request signaling over the short path, i.e. over the link which is not affected by the unidirectional failure.

Upon reception of the Reverse Request signaling over the short path, node A enters a idle state, and issues and sends request packets carrying the No Request code over the long path.

When node D receives the request packet carrying the No Request code from node A and still detects the unidirectional failure, node D enters a Signal Fail switching state, issues and sends request packets carrying the Signal Fail code over both the short path and the long path and starts implementing the protection switching scheme by wrapping the user traffic flow affected by the unidirectional failure from the working path WP to the protection path PP. Upon reception of the request packet carrying the Signal fail code, also node A starts implementing the protection switching scheme by wrapping the user traffic flow affected by the unidirectional failure from the working path WP to the protection path PP.

The recovery time, i.e. the time needed to recover the user traffic flow is (N+1)×T, where T is the average time in which a request packet is issued at a node and transmitted from that node to an adjacent node, as already mentioned above.

According to the method of the second embodiment of the present invention, as applied in case the failure is unidirectional, when the Lockout of Protection command is removed at node D, node D preferably enters a Signal Fail switching state. Hence, node D preferably starts issuing and sending request packets carrying the Signal Fail code over both the short path and the long path towards node A. In the meanwhile, node D preferably starts implementing the protection switching scheme by wrapping the user traffic flow affected by the unidirectional failure from the working path WP to the protection path PP. At this point, node A receives request packets carrying the Signal Fail code and enters the Signal Fail switching state. Node A then issues and sends request packets carrying the Signal Fail code over the long path, and issues and sends request packets carrying the Reverse Request code over the short path. In the meanwhile, also node A starts implementing the protection switching scheme by wrapping the user traffic flow affected by the unidirectional failure from the working path WP to the protection path PP.

Implementing the method of the second embodiment of the present invention in case of a unidirectional failure, the recovery time is equal to about T and it is much faster than the time needed to protect the user traffic flow according to the "standard" procedures described above. For example, if N=16, the recovery time according to the method of the second embodiment as applied when a unidirectional failure is considered, is equal to about 3.3 ms, while the recovery time according to the standard procedure is equal to about 56.1 ms. If N=128, the recovery time according to the method of the second embodiment is still equal to about 3.3 ms, while the recovery time according to the standard procedure is equal to about 425.7 ms. It is apparent that the method according to the second embodiment of the present invention as applied in case of a unidirectional failure occurs, allows to greatly reduce the recovery time, especially when large networks are considered.

## Claims

1. A method for controlling protection switching in a communication network (RN) having a ring topology, said communication network (RN) being configured to implement an MLPS-TP ring protection switching scheme and an automatic protection switching control protocol, wherein
a lockout of protection command (LP_cmd) is applied at a node (D) of said network (RN);
a bidirectional failure occurs on a span connecting said node to an adjacent node (A) of the network (RN); and
a further command (C_cmd) is applied at said node (D), said further command (C_cmd) removing said lockout of protection command (LP_cmd),
the method comprising, at any one of said node (D) and said adjacent node (A), detecting said failure (F),
the method being **characterized in that** it comprises, if there is not a further lockout of protection command locally applied at said any one of said node (D) and said adjacent node (A), sending a request packet (SF(AD)) carrying a signal fail indication towards the other one of said node (D) and said adjacent node (A).

2. The method according to claim 1, wherein it comprises:
a) at said adjacent node (A), detecting said failure (F) and, if there is not said further lockout of protection command locally applied at said adjacent node (A), sending said request packet (SF(AD)) carrying the signal fail indication towards said node (D); and
b) at said node (D), detecting said failure (F), receiving said request packet (SF(AD)) and, if there is not an even further lockout of protection command locally applied at said node (D), implementing said protection switching to a user traffic flow affected by said failure (F).

3. The method according to claim 2, wherein it further comprises, at said step b), entering a signal fail switching state and sending a further request packet (SF(DA)) carrying the signal fail indication towards said adjacent node (A).

4. The method according to claim 3, wherein it further comprises:
c) at said adjacent node (A), receiving said further request packet (SF(DA)), entering a signal fail switching state and implementing said protection switching to said user traffic flow affected by said failure (F).

5. The method according to claim 1, wherein it comprises:
a') at said node (D), detecting said failure (F) and, if there is not said further lockout of protection command locally applied at said node (D), sending said request packet (SF(DA)) carrying the signal fail indication, and implementing said protection switching to a user traffic flow affected by said failure (F); and
b') at said adjacent node (A), detecting said failure (F), receiving said request packet (SF(DA)) and, if there is not an even further lockout of protection command locally applied at said adjacent node (A), implementing said protection switching to said user traffic flow.

6. The method according to claim 5, wherein it further comprises, at said step a'), entering a signal fail switching state.

7. The method according to claim 5 or 6, wherein it further comprises, at said step b'), entering a signal fail switching state and sending a further request packet (SF(AD)) carrying the signal fail indication towards said node (D).

8. The method according to any one of claims 5 to 7, wherein it further comprises, at said step a'), launching a timer.

9. The method according to claim 8, wherein said timer has a pre-determined duration and said duration is pre-determined on the basis of a round-trip time of a request packet over a long path between said node (D) and said adjacent node (A).

10. The method according to claim 7 and claim 8 or 9, wherein it further comprises :
c') at said node (D), receiving said further request packet (SF(AD)) and, if said timer is not yet expired, stopping said timer.

11. The method according to any one of claims 8 to 10, wherein it further comprises, at said node (D), upon expiration of said timer, receiving an even further request packet carrying a lockout of protection indication from said adjacent node (A), entering a lockout of protection - far end switching state and stopping implementing said protection switching to said user traffic flow.

12. A node (A) for a communication network (RN) having a ring topology and implementing a protection switching scheme, said protection switching scheme being an MLPS-TP ring protection switching scheme, said node (A) being configured to implement an automatic protection switching control protocol and to, when
a lockout of protection command (LP_cmd) is applied at a further node (D) of the communication network (RN) adjacent to said node (A);
a bidirectional failure occurs on a span connecting said node (A) to said adjacent node (D); and
a further command (C_cmd) is applied at said adjacent node (D), said further command (C_cmd) removing said lockout of protection command (LP_cmd),
detect said failure (F), the node (A) being **characterized in that** it is further configured to, if there is not a further lockout of protection command locally applied at said node (A), send a request packet (SF(AD)) carrying a signal fail indication towards said adjacent node (D).

13. A node (D) for a communication network (RN) having a ring topology and implementing a protection switching scheme, said protection switching scheme being an MLPS-TP ring protection switching scheme, said node (D) being configured to implement an automatic protection switching control protocol and to, when
a lockout of protection command (LP_cmd) is applied at said node (D);
a bidirectional failure occurs on a span connecting said node (D) to a further node (A) of the communication network (RN) adjacent to said node (D); and
a further command (C_cmd) is applied at said node (D), said further command (C_cmd) removing said lockout of protection command (LP_cmd),
detect said failure (F), the node (D) being **characterized in that** it is further configured to, if there is not a further lockout of protection command locally applied at said node (D), send a request packet (SF(DA)) carrying a signal fail indication towards said adjacent node (A).

14. A communication network (RN) having a ring topology comprising a node according to claim 12 or 13.

15. The communication network (RN) according to claim 14, wherein said communication network (RN) is an MPLS or MPLS-TP communication network.

## Patentansprüche

1. Verfahren zum Steuern der Schutzschaltung in einem Kommunikationsnetzwerk (RN) mit einer Ringtopologie, wobei das besagte Kommunikationsnetzwerk (RN) ausgelegt ist, um ein MPLS-TP Ringschutzschaltungsschema und ein automatisches Schutzschaltungssteuerprotokoll zu implementieren, wobei
ein Schutzsperre-Befehl (LP_cmd) an einem Knoten (D) des besagten Netzwerks (RN) angewendet wird;
ein bidirektionaler Fehler an einer Spanne auftritt, die den besagten Knoten mit einem benachbarten Knoten (A) des Netzwerks (RN) verbindet; und
ein weiterer Befehl (C_cmd) an dem besagten Knoten (D) angewendet wird, wobei der besagte weitere Befehl (C_cmd) den besagten Schutzsperre-Befehl (LP_cmd) entfernt,
wobei das Verfahren an jedem beliebigen des besagten Knotens (D) und des besagten benachbarten Knotens (A) das Erkennen des besagten Fehlers (F) umfasst,
wobei das Verfahren **dadurch gekennzeichnet ist, dass** es, falls es keinen weiteren Schutzsperre-Befehl gibt, der lokal an dem besagten beliebigen des besagten Knotens (D) und des besagten benachbarten Knotens (A) angewendet wird, das Senden eines Anfragepakets (SF(AD)) umfasst, das eine Signalausfallsangabe zum anderen des besagten Knotens (D) und des besagten benachbarten Knotens (A) trägt.

2. Verfahren nach Anspruch 1, wobei es Folgendes umfasst:
a) an dem besagten benachbarten Knoten (A), Erkennen des besagten Fehlers (F) und, falls es den besagten weiteren Schutzsperre-Befehl nicht gibt, der lokal an dem besagten benachbarten Knoten (A) angewendet wird, Senden des besagten Anfragepakets (SF(AD)), das die Signalausfallsangabe zum besagten Knoten (D) trägt; und
b) an dem besagten Knoten (D), Erkennen des besagten Fehlers (F), Empfangen des besagten Anfragepakets (SF(AD)) und, falls es nicht noch einen weiteren Schutzsperre-Befehl gibt, der lokal an dem besagten Knoten (D) angewendet wird, Implementieren der besagten Schutzschaltung an einem Benutzerverkehrsfluss, der von dem besagten Fehler (F) betroffen ist.

3. Verfahren nach Anspruch 2, wobei es weiterhin an dem besagten Schritt b) das Eingeben eines Signalausfall-Schaltzustands und das Senden eines weiteren Anfragepakets (SF(DA)) umfasst, das die Signalausfallsangabe zum besagten benachbarten Knoten (A) trägt.

4. Verfahren nach Anspruch 3, wobei es weiterhin Folgendes umfasst:
c) an dem besagten benachbarten Knoten (A), Empfangen des besagten weiteren Anfragepakets (SF(DA)), Eingeben eines Signalausfall-Schaltzustands und Implementieren der besagten Schutzschaltung an dem besagten Benutzerverkehrsfluss, der von dem besagten Fehler (F) betroffen ist.

5. Verfahren nach Anspruch 1, wobei es Folgendes umfasst:
a') an dem besagten Knoten (D), Erkennen des besagten Fehlers (F) und, falls es den besagten weiteren Schutzsperre-Befehl nicht gibt, der lokal an dem besagten Knoten (D) angewendet wird, Senden des besagten Anfragepakets (SF(DA)), das die Signalausfallsangabe trägt, und Implementieren der besagten Schutzschaltung an einem Benutzerverkehrsfluss, der von dem besagten Fehler (F) betroffen ist; und
b') an dem besagten benachbarten Knoten (A), Erkennen des besagten Fehlers (F), Empfangen des besagten Anfragepakets (SF(DA)) und, falls es nicht noch einen weiteren Schutzsperre-Befehl gibt, der lokal an dem besagten benachbarten Knoten (A) angewendet wird, Implementieren der besagten Schutzschaltung an dem besagten Benutzerverkehrsfluss.

6. Verfahren nach Anspruch 5, wobei es weiterhin an dem besagten Schritt a') das Eingeben eines Signalausfall-Schaltzustands umfasst.

7. Verfahren nach Anspruch 5 oder 6, wobei es weiterhin an dem besagten Schritt b') das Eingeben eines Signalausfall-Schaltzustands und das Senden eines weiteren Anfragepakets (SF(AD)) umfasst, das die Signalausfallsangabe zum besagten Knoten (D) trägt.

8. Verfahren nach einem beliebigen der Ansprüche 5 bis 7, wobei es weiterhin an dem besagten Schritt a') das Starten einer Zeitschaltuhr umfasst.

9. Verfahren nach Anspruch 8, wobei die besagte Zeitschaltuhr über eine vorausbestimmte Dauer verfügt und die besagte Dauer auf Basis einer Laufzeit eines Anfragepakets über einen langen Weg zwischen dem besagten Knoten (D) und dem besagten benachbarten Knoten (A) vorausbestimmt wird.

10. Verfahren nach Anspruch 7 und Anspruch 8 oder 9, wobei es weiterhin Folgendes umfasst:
c') an dem besagten Knoten (D), Empfangen des besagten weiteren Anfragepakets (SF(AD)) und, falls die besagte Zeitschaltuhr noch nicht abgelaufen ist, Anhalten der besagten Zeitschaltuhr.

11. Verfahren nach einem beliebigen der Ansprüche 8 bis 10, wobei es an dem besagten Knoten (D) nach Ablauf der besagten Zeitschaltuhr das Empfangen noch eines weiteren Anfragepakets, das eine Schutzsperreangabe trägt, von dem besagten benachbarten Knoten (A), das Eingeben eines Schutzsperre-Gegenseite-Schaltzustands und das Anhalten der Implementierung der besagten Schutzschaltung an dem besagten Benutzerverkehrsfluss umfasst.

12. Knoten (A) für ein Kommunikationsnetzwerk (RN), das eine Ringtopologie aufweist und ein Schutzschaltungsschema implementiert, wobei das besagte Schutzschaltungsschema ein MPLS-TP Ringschutzschaltungsschema ist, wobei der besagte Knoten (A) ausgelegt ist, um ein automatisches Schutzschaltungssteuerprotokoll zu implementieren und um, wenn
ein Schutzsperre-Befehl (LP_cmd) an einem weiteren Knoten (D) des Kommunikationsnetzwerks (RN) angewendet wird, der mit dem besagten Knoten (A) benachbart ist;
ein bidirektionaler Fehler an einer Spanne auftritt, die den besagten Knoten (A) mit dem besagten benachbarten Knoten (D) verbindet; und
ein weiterer Befehl (C_cmd) an dem besagten benachbarten Knoten (D) angewendet wird, wobei der besagte weitere Befehl (C_cmd) den besagten Schutzsperre-Befehl (LP_cmd) entfernt,
den besagten Fehler (F) zu erkennen, wobei der Knoten (A) **dadurch gekennzeichnet ist, dass** er weiterhin ausgelegt ist, um, falls es keinen weiteren Schutzsperre-Befehl gibt, der lokal an dem besagten Knoten (A) angewendet wird, ein Anfragepaket (SF(AD)) zu senden, das eine Signalausfallsangabe zum besagten benachbarten Knoten (D) trägt.

13. Knoten (D) für ein Kommunikationsnetzwerk (RN), das eine Ringtopologie aufweist und ein Schutzschaltungsschema implementiert, wobei das besagte Schutzschaltungsschema ein MPLS-TP Ringschutzschaltungsschema ist, wobei der besagte Knoten (D) ausgelegt ist, um ein automatisches Schutzschaltungssteuerprotokoll zu implementieren und um, wenn
ein Schutzsperre-Befehl (LP_cmd) an dem besagten Knoten (D) angewendet wird; ein bidirektionaler Fehler an einer Spanne auftritt, die den besagten Knoten (D) mit einem weiteren Knoten (A) des Kommunikationsnetzwerks (RN) verbindet, der mit dem besagten Knoten (D) benachbart ist; und
ein weiterer Befehl (C_cmd) an dem besagten Knoten (D) angewendet wird, wobei der besagte weitere Befehl (C_cmd) den besagten Schutzsperre-Befehl (LP_cmd) entfernt,
den besagten Fehler (F) zu erkennen, wobei der Knoten (D) **dadurch gekennzeichnet ist, dass** er weiterhin ausgelegt ist, um, falls es keinen weiteren Schutzsperre-Befehl gibt, der lokal an dem besagten Knoten (D) angewendet wird, ein Anfragepaket (SF(DA)) zu senden, das eine Signalausfallsangabe zum besagten benachbarten Knoten (A) trägt.

14. Kommunikationsnetzwerk (RN) mit einer Ringtopologie, umfassend einen Knoten nach Anspruch 12 oder 13.

15. Kommunikationsnetzwerk (RN) nach Anspruch 14, wobei das besagte Kommunikationsnetzwerk (RN) ein MPLS oder MPLS-TP Kommunikationsnetzwerk ist.

## Revendications

1. Procédé pour contrôler une commutation de protection dans un réseau de communication (RN) ayant une topologie en anneau, ledit réseau de communication (RN) étant configuré pour mettre en oeuvre un schéma de commutation de protection en anneau MPLS-TP et un protocole de contrôle de commutation de protection automatique, dans lequel
une commande de verrouillage de protection (LP_cmd) est appliquée au niveau d'un noeud (D) dudit réseau (RN) ;
une défaillance bidirectionnelle se produit sur une liaison connectant ledit noeud à un noeud adjacent (A) du réseau (RN) ; et
une autre commande (C_cmd) est appliquée au niveau dudit noeud (D), ladite autre commande (C_cmd) supprimant ladite commande de verrouillage de protection (LP_cmd),
le procédé comprenant, au niveau de l'un quelconque dudit noeud (D) et dudit noeud adjacent (A), la détection de ladite défaillance (F),
le procédé étant **caractérisé en ce qu'**il comprend, s'il n'y a pas une autre commande de verrouillage de protection appliquée localement au niveau dudit l'un quelconque dudit noeud (D) et dudit noeud adjacent (A), l'envoi d'un paquet de demande (SF(AD)) portant une indication de défaut de signal vers l'autre dudit noeud (D) et dudit noeud adjacent (A).

2. Procédé selon la revendication 1, comprenant :
a) au niveau dudit noeud adjacent (A), la détection de ladite défaillance (F) et, s'il n'y a pas ladite autre commande de verrouillage de protection appliquée localement au niveau dudit noeud adjacent (A), l'envoi dudit paquet de demande (SF(AD)) portant l'indication de défaut de signal vers ledit noeud (D) ; et
b) au niveau dudit noeud (D), la détection de ladite défaillance (F), la réception dudit paquet de demande (SF(AD)) et, s'il n'y a pas encore une autre commande de verrouillage de protection appliquée localement au niveau dudit noeud (D), la mise en oeuvre de ladite commutation de protection sur un flux de trafic d'utilisateur affecté par ladite défaillance (F).

3. Procédé selon la revendication 2, comprenant en outre, à ladite étape b), l'entrée dans un état de commutation de défaut de signal et l'envoi d'un autre paquet de demande (SF(DA)) portant l'indication de défaut de signal vers ledit noeud adjacent (A).

4. Procédé selon la revendication 3, comprenant en outre :
c) au niveau dudit noeud adjacent (A), la réception dudit autre paquet de demande (SF(DA)), l'entrée dans un état de commutation de défaut de signal et la mise en oeuvre de ladite commutation de protection sur ledit flux de trafic d'utilisateur affecté par ladite défaillance (F).

5. Procédé selon la revendication 1, comprenant :
a') au niveau dudit noeud (D), la détection de ladite défaillance (F) et, s'il n'y a pas ladite autre commande de verrouillage de protection appliquée localement au niveau dudit noeud (D), l'envoi dudit paquet de demande (SF(DA)) portant l'indication de défaut de signal, et la mise en oeuvre de ladite commutation de protection sur un flux de trafic d'utilisateur affecté par ladite défaillance (F) ; et
b') au niveau dudit noeud adjacent (A), la détection de ladite défaillance (F), la réception dudit paquet de demande (SF(DA)) et, s'il n'y a pas encore une autre commande de verrouillage de protection appliquée localement au niveau dudit noeud adjacent (A), la mise en oeuvre de ladite commutation de protection sur ledit flux de trafic d'utilisateur.

6. Procédé selon la revendication 5, comprenant en outre, à ladite étape a'), l'entrée dans un état de commutation de défaut de signal.

7. Procédé selon la revendication 5 ou 6, comprenant en outre, à ladite étape b'), l'entrée dans un état de commutation de défaut de signal et l'envoi d'un autre paquet de demande (SF(AD)) portant l'indication de défaut de signal vers ledit noeud (D).

8. Procédé selon l'une quelconque des revendications 5 à 7, comprenant en outre, à ladite étape a'), le lancement d'un temporisateur.

9. Procédé selon la revendication 8, dans lequel ledit temporisateur a une durée prédéterminée et ladite durée est prédéterminée sur la base d'un temps d'aller-retour d'un paquet de demande sur un long trajet entre ledit noeud (D) et ledit noeud adjacent (A).

10. Procédé selon la revendication 7 et la revendication 8 ou 9, comprenant en outre :
c') au niveau dudit noeud (D), la réception dudit autre paquet de demande (SF(AD)) et, si ledit temporisateur n'a pas encore expiré, l'arrêt dudit temporisateur.

11. Procédé selon l'une quelconque des revendications 8 à 10, comprenant en outre, au niveau dudit noeud (D), lors de l'expiration dudit temporisateur, la réception d'encore un autre paquet de demande portant une indication de verrouillage de protection en provenance dudit noeud adjacent (A), l'entrée dans un état de commutation de verrouillage de protection - à l'extrémité distante et l'arrêt de la mise en oeuvre de ladite commutation de protection sur ledit flux de trafic d'utilisateur.

12. Noeud (A) pour un réseau de communication (RN) ayant une topologie en anneau et mettant en oeuvre un schéma de commutation de protection, ledit schéma de commutation de protection étant un schéma de commutation de protection en anneau MPLS-TP, ledit noeud (A) étant configuré pour mettre en oeuvre un protocole de contrôle de commutation de protection automatique et pour, lorsqu'une commande de verrouillage de protection (LP_cmd) est appliquée au niveau d'un autre noeud (D) du réseau de communication (RN) adjacent audit noeud (A) ;
une défaillance bidirectionnelle se produit sur une liaison connectant ledit noeud (A) audit noeud adjacent (D) ; et
une autre commande (C_cmd) est appliquée au niveau dudit noeud adjacent (D), ladite autre commande (C_cmd) supprimant ladite commande de verrouillage de protection (LP_cmd),
détecter ladite défaillance (F), le noeud (A) étant **caractérisé en ce qu'**il est en outre configuré pour, s'il n'y a pas une autre commande de verrouillage de protection appliquée localement au niveau dudit noeud (A), envoyer un paquet de demande (SF(AD)) portant une indication de défaut de signal vers ledit noeud adjacent (D).

13. Noeud (D) pour un réseau de communication (RN) ayant une topologie en anneau et mettant en oeuvre un schéma de commutation de protection, ledit schéma de commutation de protection étant un schéma de commutation de protection en anneau MPLS-TP, ledit noeud (D) étant configuré pour mettre en oeuvre un protocole de contrôle de commutation de protection automatique et pour, lorsque
une commande de verrouillage de protection (LP_cmd) est appliquée au niveau dudit noeud (D) ;
une défaillance bidirectionnelle se produit sur une liaison connectant ledit noeud (D) à un autre noeud (A) du réseau de communication (RN) adjacent audit noeud (D) ; et
une autre commande (C_cmd) est appliquée au niveau dudit noeud (D), ladite autre commande (C_cmd) supprimant ladite commande de verrouillage de protection (LP_cmd),
détecter ladite défaillance (F), le noeud (D) étant **caractérisé en ce qu'**il est en outre configuré pour, s'il n'y a pas une autre commande de verrouillage de protection appliquée localement au niveau dudit noeud (D), envoyer un paquet de demande (SF(DA)) portant une indication de défaut de signal vers ledit noeud adjacent (A).

14. Réseau de communication (RN) ayant une topologie en anneau comprenant un noeud selon la revendication 12 ou 13.

15. Réseau de communication (RN) selon la revendication 14, ledit réseau de communication (RN) étant un réseau de communication MPLS ou MPLS-TP.
